# EUROPEAN PATENT SPECIFICATION

(11) **EP 1 671 728 B1**
(45) Date of publication and mention of the grant of the patent: **26.09.2007**
(21) Application number: 05027234.3
(22) Date of filing: 13.12.2005
(51) Int. Cl.: B23B 29/24, B23Q 3/18

(54) **Turret tool rest**
Werkzeugrevolver
Porte-outil de tourelle

(30) Priority: 16.12.2004 JP 2004363811
(43) Date of publication of application: 21.06.2006
(73) Proprietor: Mori Seiki Co.,Ltd., Nara 639-1160 (JP)
(72) Inventor: Sakai, Shigetsugu, c/o Mori Seiki Co., Ltd, Yamatokoriyama-shi Nara, 639-1160 (JP)
(74) Representative: Reinhard - Skuhra - Weise & Partner

(56) References cited:
- US-A- 4 018 112
- PATENT ABSTRACTS OF JAPAN vol. 1999, no. 03, 31 March 1999 (1999-03-31) & JP 10 337625 A (OKUMA MACH WORKS LTD), 22 December 1998 (1998-12-22)
- PATENT ABSTRACTS OF JAPAN vol. 2003, no. 11, 5 November 2003 (2003-11-05) & JP 2003 181743 A (SEIWA SEIKI KK), 2 July 2003 (2003-07-02)
- PATENT ABSTRACTS OF JAPAN vol. 018, no. 572 (M-1696), 2 November 1994 (1994-11-02) & JP 06 210504 A (MORI SEIKI CO LTD; others: 01), 2 August 1994 (1994-08-02)

## Description

### BACKGROUND OF THE INVENTION

### Technical Field

The present invention relates to tool rests furnished with tool holders for holding tools, a rotatably supported turret-a polygonal column on the outer peripheral surface of which a plurality of the tool holders is detachably/reattachably mounted-and an indexing mechanism for rotating the turret to index a given tool holder into a work position.

### Description of the Related Art

Tool rests used with machine tools such as lathes typically have a tool holder, a turret that is a column with multiple sides, an indexing mechanism, and a rotary drive mechanism. The tool holder could be a turning tool holder for holding lathe tools such as cutting bits and other turning tools, or a rotary tool holder for holding end mills, drill bits, and other rotary tools. The turret is supported to rotate freely and has a plurality of tool holders (turning tool holders or rotary tool holders) detachably/reattachably affixed to its outside surfaces. The indexing mechanism rotates the turret to index into the work position a specific one of the multiple tool holders (tools) held by the turret. The rotary drive mechanism drives the rotary tool on the axial center of the tool held in a rotary tool holder. The lathe thus processes a workpiece using the turning tool or machining tool indexed into the work position by the indexing mechanism.

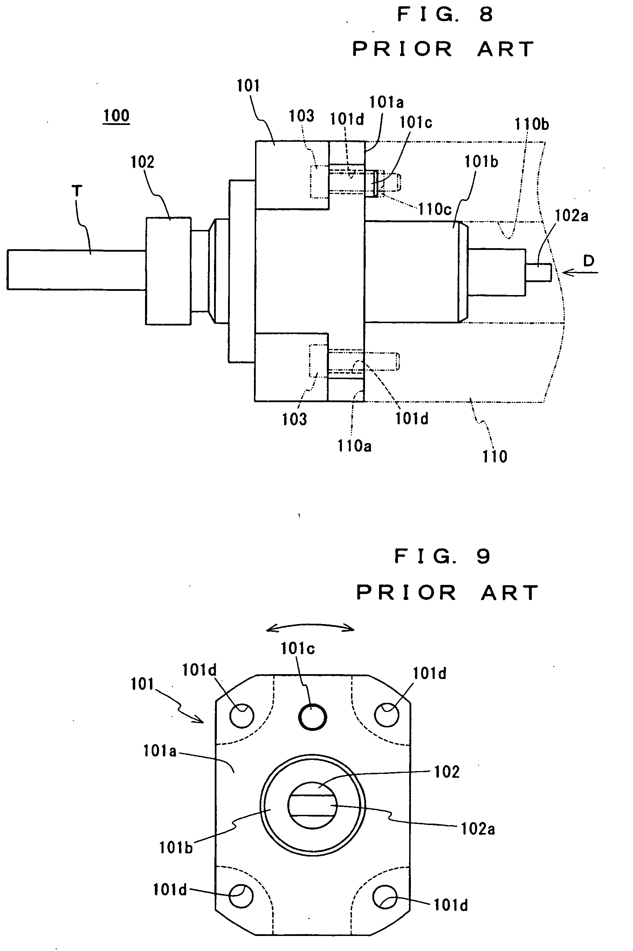

One example known to date of this type of tool holder is the rotary tool holder disclosed in Japanese Unexamined Pat. App. Pub. No. 2003-181743. As shown in Fig. 8 and Fig. 9, this rotary tool holder 100 has a housing 101 and a tool spindle 102. One end of the housing 101 functions as a turret mounting surface 101a, and a cylindrical mounting arbor 101b is formed in the center of the turret mounting surface 101a. The tool spindle 102 is rotatably supported by the housing 101 with the axis of the tool spindle 102 being perpendicular to the turret mounting surface 101a, and holds a rotary tool *T* in one end.

The housing 101 has a support hole (not shown in the figure) passing through the housing 101 from the end of the mounting arbor 101b to the opposite side of the housing 101, an alignment pin 101c protruding from the turret mounting surface 101a, and through-holes 101d provided in four corner positions. The housing 101 supports the tool spindle 102 within the support hole, with the fore-end and hind-end portions of the tool spindle 102 sticking out.

An engagement projection 102a that engages with a matching drive shaft of the rotary drive mechanism is formed on the hind end portion of the tool spindle 102. When the engagement projection 102a is engaged with the drive shaft, torque from the rotary drive mechanism is transferred to the tool spindle 102, which thus rotates on the longitudinal axis of the spindle.

A mounting hole 110b that communicates with the internal cavity of the turret 110 and accepts the mounting arbor 101b of the rotary tool holder 100, an alignment hole 110c into which the alignment pin 101c is fitted, and threaded holes (not shown in the figure) corresponding to the through-holes 101d in the housing 101 are formed in each tool holder mounting face 110a on the outer peripheral surface of the turret 110.

With a rotary tool holder 100 and turret 110 thus constituted, the mounting arbor 101b on the housing 101 is fit into the mounting hole 110b, and at the same time the alignment pin 101c is fit into the alignment hole 110c in the turret 110 to align the rotary tool holder 100 with respect to the turret 110; the turret mounting surface 101a of the rotary tool holder 100 is then brought into abutment with the tool holder mounting surface 110a of the turret 110, and bolts 103 are passed through the through-holes 101d in the housing 101 and screwed into the (not shown) threaded holes to fasten the rotary tool holder 100 to the turret 110.

This conventional rotary tool holder 100 and turret 110 which align the rotary tool holder 100 with the turret 110 by fitting the mounting arbor 101b and alignment pin 101c on the housing 101 into the mounting hole 110b and alignment hole 110c in the turret 110 have the following problems.

Specifically, because the outer circumferential surface of the mounting arbor 101b and the outer circumferential surface of the alignment pin 101c are constrained by the inner circumferential surface of the mounting hole 110b and the inner circumferential surface of the alignment hole 110c, respectively, and because insertion length of the mounting arbor 101b along its axial orientation (the orientation along which the rotary tool holder 100 is attached/detached) is extensive, fitting the mounting arbor 101b and alignment pin 101c into the mounting hole 110b and alignment hole 110c is difficult, preventing the rotary tool holder 100 from being mounted onto the turret 110 quickly and easily. What is more, the difficulty of fitting these parts together leads to wear and tear and other problems in installation that make precision mounting impossible and turn out to be a factor causing the precision with which a workpiece is machined to drop.

An additional problem is that because sufficient separation cannot be established between the mounting arbor 101b and alignment pin 101c (that is, because the distance between the mounting arbor 101b and alignment pin 101c is short), alignment precision in the rotational orientation (indicated by the arrows in Fig. 9) is poor. While this does not directly affect machining precision when using a rotary tool holder 100 that holds the rotary tool *T* with the tool axis orthogonal to the turret mounting surface 101a, the tip of the rotary tool is displaced, leading to a drop in workpiece machining precision, when using a rotary tool holder configured to hold rotary tools with the tool axis parallel to the turret mounting surface 101a.

A still further problem is that repeatedly attaching and detaching the rotary tool holder 100 wears and on and mars the mounting hole 110b and alignment hole 110c in the turret 110, such that the turret 110 has to be replaced, which raises replacement costs.

US-4,018,112 is regarded as the description of the closest prior art and discloses
a tool rest
furnished with tool holders for holding tools; a rotatably supported, polygonal columnar turret onto the outer peripheral surface of which a plurality of the tool holders is detachably/reattachably mounted; and an indexing mechanism for rotating the turret to index into an operating position a preestablished tool holder among the plurality of tool holders mounted on the turret
wherein
said turret has a first key;
a key slot for receiving said key is formed in the turret mounting surface of the tool holder.

### BRIEF SUMMARY OF THE INVENTION

An object of the present invention, brought about taking the above-described state of the art into consideration, is to make available a tool rest that enables the tool holder to be installed quickly, easily, and precisely on the turret, and that enables the tool holder to be located on the turret with a high degree of precision.

The present invention, which is for accomplishing the foregoing objective, involves a tool rest as defined in claim 1.

When a tool holder is installed to the turret of a tool rest according to the present invention, the first and second keys formed on each tool holder mounting surface on the outside of the turret are inserted to the key slots formed in the turret mounting surface of the tool holder, thus mating the engagement surfaces of the first key and second key with the key slots and thereby positioning the tool holder to the turret. The tool holder is then suitably fastened to the turret.

A tool rest according to the present invention thus enables quickly and easily installing a tool holder to the turret because the tool holder is positioned to the turret by inserting keys to key slots, the insertion depth of the key to the key slot in the attaching/detaching direction of the tool holder is short, and the keys can thus be easily inserted to the key slots. Furthermore, because the tool holder can be easily installed to the turret, improper installation of the tool holder can be prevented and the tool holder can be precisely mounted on the turret. This also improves workpiece machining precision.

A tool rest according to another aspect of the invention additionally has a third key having parallel side engagement surfaces rendered protruding from each tool holder mounting surface at a position separated a specific distance from the first key so that the engagement surfaces of the third key are coplanar to the engagement surfaces of the first key. The key slots are formed to accept and engage the engagement surfaces of the first key, second key, and third key inserted thereto.

Thus rendering a third key with wide gap between it and the first key enables improving the positioning precision of the tool holder to the turret in the direction of tool holder rotation, and thus also enables improving workpiece machining precision.

The turret of a tool rest in yet another aspect of the invention has a positioning member formed in unison with the keys, and a mounting hole in which the positioning member is installed so that the keys protrude from the tool holder mounting surface rendered in each tool holder mounting surface.

If the keys are rendered discretely and then assembled to the tool holder mounting surface of the turret, the positioning precision between the keys is adversely affected by differences in the manufacturing precision of each key and the precision with which each key is installed to the tool holder mounting surface, and the positioning precision of the tool holder may also be adversely affected accordingly. However, by rendering the keys in unison, the manufacturing precision of the keys and the installation precision of the keys to the turret can be prevented from affecting the relative positions of the keys and thus the positioning of the tool holder. Positioning precision can thus be improved for both the keys and the tool holder.

The positioning member is yet further preferably installed freely attachably and detachably in a mounting hole rendered in the tool holder mounting surface. When thus rendered, wear and damage to the turret keys from repeatedly attaching and detaching tool holders can be corrected by simply replacing only the positioning member, thus reducing the repair cost.

The turret in a tool rest according to yet another aspect of the invention has a first positioning member formed with the first key, a second positioning member formed with the second key, and a third positioning member formed with the third key; and each tool holder mounting surface has three mounting holes formed therein so that the positioning members can be freely attachably and detachably installed so that the first key, second key, and third key protrude from the tool holder mounting surface.

When the turret keys become worn or damaged, this aspect of the invention also enables replacing only the positioning members. However, because each of the keys is rendered in unison with a particular positioning member, the manufacturing precision of each positioning member and the installation precision of each positioning member to the turret can affect and possibly reduce the positioning precision between the individual keys.

A tool rest according to the present invention thus enables quickly and easily installing a tool holder to the turret because the tool holder is positioned to the turret by mating keys with matching key slots. Furthermore, by rendering three keys, that is, a first key, a second key, and a third key, with a wide gap between the first key and third key, the tool holder can be positioned more precisely in the direction of tool holder rotation.

Yet further, rendering the keys in unison with each other improves the positioning precision between the keys and thus also improves the positioning precision of the tool holder. In addition, forming plural keys in unison with a single positioning member, or forming a plurality of positioning members each in unison with a key, and installing the positioning member(s) attachably and detachably to the turret, reduces the repair and replacement cost when the keys become worn or damaged.

From the following detailed description in conjunction with the accompanying drawings, the foregoing and other objects, features, aspects and advantages of the present invention will become readily apparent to those skilled in the art.

### BRIEF DESCRIPTION OF THE SEVERAL VIEWS OF THE DRAWINGS

Fig. 1 is a schematic elevational view of a tool rest according to one embodiment of the present invention;
Fig. 2 is a schematic elevational view of a rotary tool holder involving the present embodiment of the invention;
Fig. 3 is a lateral view in the direction of arrow A in Fig. 2;
Fig. 4 is a lateral view of the outer peripheral surface of a turret involving the present embodiment;
Fig. 5 is a section view along arrow indicators B-B in Fig. 4;
Fig. 6 is a lateral view of the outer peripheral surface of a turret involving another embodiment of the present invention;
Fig. 7 is a section view along arrow indicators C-C in Fig. 6;
Fig. 8 is a schematic elevational view of a rotary tool holder involving a conventional example; and
Fig. 9 is a lateral view along arrow indicator D in Fig. 8.

### DETAILED DESCRIPTION OF THE INVENTION

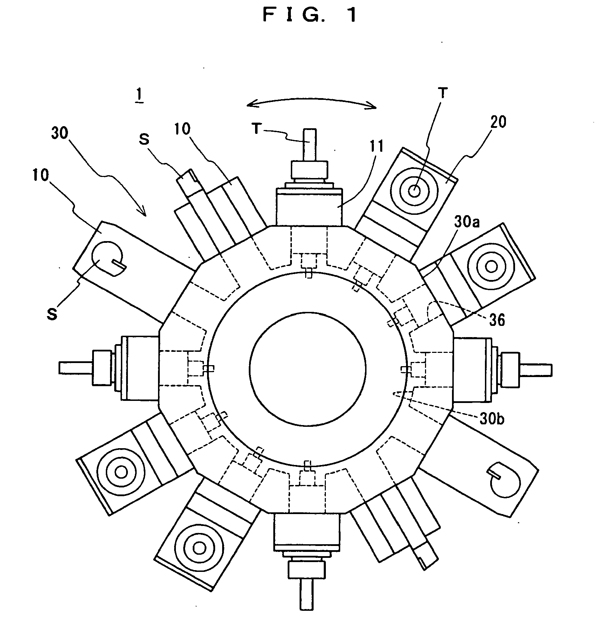

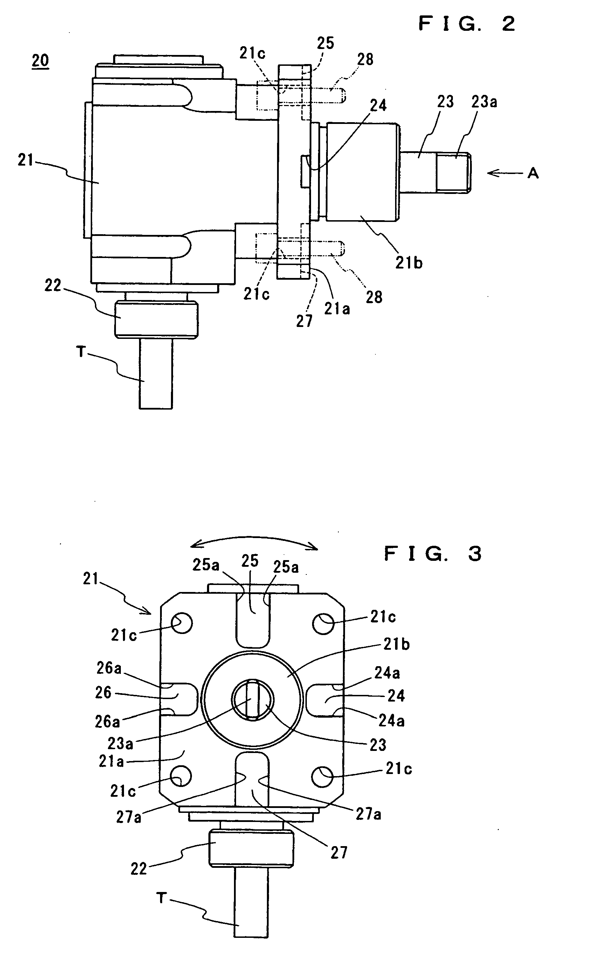

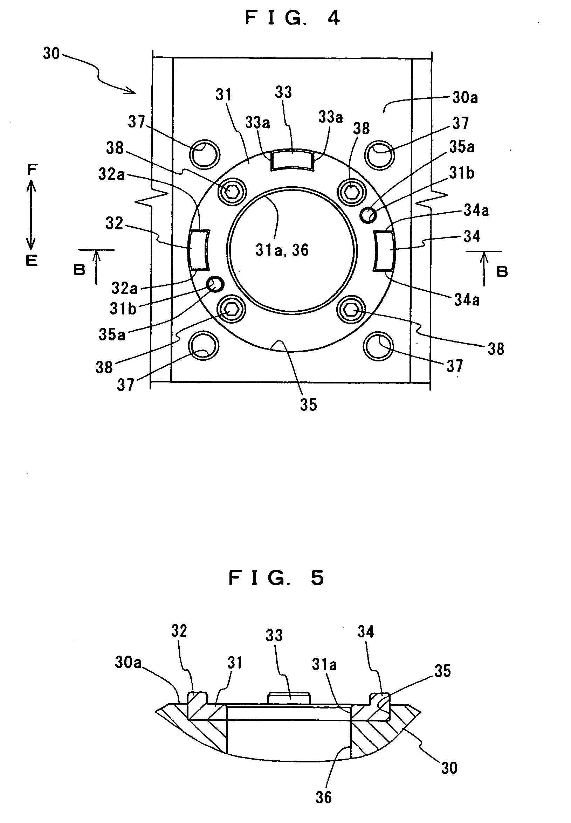

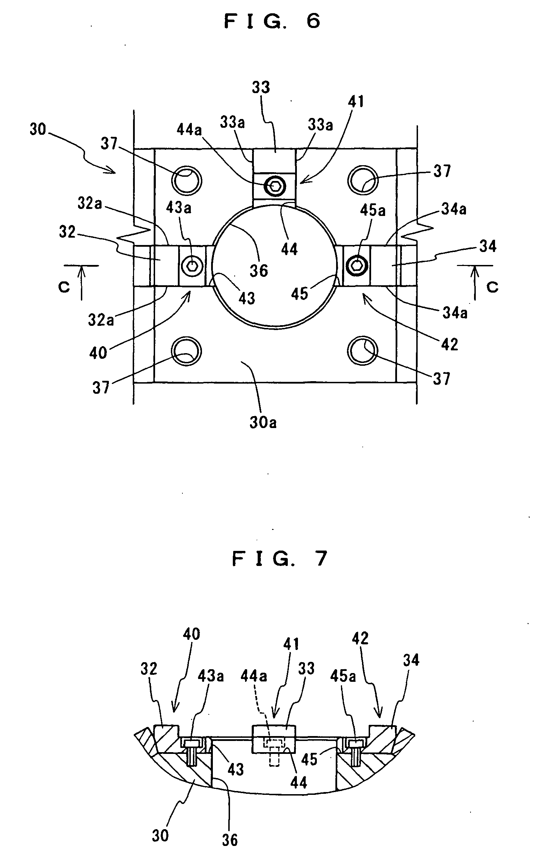

Preferred embodiments of the present invention are described below with reference to the accompanying figures. Fig. 1 is a schematic front view of a tool rest according to a preferred embodiment of the present invention. Fig. 2 is a schematic front view of a rotary tool holder according to a preferred embodiment of the invention. Fig. 3 is a side view in line with arrow A in Fig. 2. Fig. 4 is a side view of an outside surface of a turret according to the present invention. Fig. 5 is a section view through line B-B in Fig. 4.

As shown in Fig. 1, a tool rest 1 according to this embodiment of the invention has one or more turning tool holders 10 for holding cutting tools and other turning tools S, one or more rotary tool holders 11, 20 for holding end mills, drill bits, and other rotary tools T, a turret 30 rendered as a polygonally shaped column having multiple surfaces for freely and easily attaching and detaching a plurality of tool holders 10, 11, 20, a tool rest carriage (not shown in the figure) that supports the turret 30 so that the turret 30 can rotate freely on its axis, an indexing mechanism (not shown in the figure), and a rotary drive mechanism (not shown in the figure). The indexing mechanism rotates the turret 30 to index a specific one of the multiple tool holders 10, 11, 20 (that is, one of the tools S, T) to the operating position. The rotary drive mechanism causes a rotary tool T held in a rotary tool holder 11, 20 to turn on the tool's axis of rotation.

In a lathe (not shown in the figure) having a first main spindle (not shown in the figure) and a second main (also not shown in the figure) that is parallel to and offset a specific distance from the first main spindle, the tool rest carriage (not shown in the figure) is disposed between the first main spindle and second main spindle so that the axis of the turret 30 is parallel to the axis of the first main spindle and the second main spindle. Note that a tool rest 1 according to the present invention can be used in various types of machine tools other than lathes.

As shown in Fig. 1 to Fig. 3, the rotary tool holder 20 has a housing 21, a tool spindle 22, and a rotary spindle 23. One end of the housing 21 functions as a turret mounting surface 21a, and a cylindrical mounting arbor 21b is formed protruding from the center of the turret mounting surface 21a. The tool spindle 22 is freely rotatably supported by the housing 21 so that the axis of the tool spindle 22 is parallel to the turret mounting surface 21a. A rotary tool T is held in the distal end of the tool spindle 22. The rotary spindle 23 is freely rotatably supported by the housing 21 with the axis of the rotary spindle 23 perpendicular to the turret mounting surface 21a.

The housing 21 has a first support hole (not shown in the figure), a second support hole (not shown in the figure), first key slot 24, second key slot 25, third key slot 26, and fourth key slot 27, and bolt holes 21c. The first support hole communicates with the internal cavity of the housing 21 from one side of the housing 21 that is parallel to the turret mounting surface 21a. The second support hole communicates with the internal cavity of the housing 21 from the end of the mounting arbor 21b. The first key slot 24, second key slot 25, third key slot 26, and fourth key slot 27 are rendered in the turret mounting surface 21a to fit keys 32, 33, 34 on the outside of the turret 30 as further described below. The bolt holes 21c are formed in the four corner areas of the turret mounting surface 21a. Bolts 28 for fastening the housing 21 to an outside surface of the turret 30 pass through the bolt holes 21c from the opposite side of the turret mounting surface 21a. The tool spindle 22 is supported in the first support hole so that the distal end of the tool spindle 22 projects outside, and rotary spindle 23 is supported in the second support hole so that one end of the rotary spindle 23 projects outside.

The first key slot 24, second key slot 25, third key slot 26, and fourth key slot 27 are formed centered around the mounting arbor 21b and opening from the mounting arbor 21b side to the outside edge of the housing 21. The opposing inside walls (engagement surfaces) 24a, 25a, 26a, 27a determining the width of each slot are parallel to each other and are rendered to engage keys 32, 33, 34. The engagement surfaces 24a, 26a of first key slot 24 and third key slot 26 are also perpendicular to the engagement surfaces 25a, 27a of the second key slot 25 and fourth key slot 27.

The first key slot 24 and third key slot 26 are further disposed on opposite sides of the mounting arbor 21b with a specific distance between the first key slot 24 and the third key slot 26 so that the engagement surfaces 24a, 26a are positioned substantially in the same planes. The second key slot 25 and fourth key slot 27 are likewise disposed on opposite sides of the mounting arbor 21b with a specific distance therebetween so that the engagement surfaces 25a, 27a are positioned substantially in the same planes.

Meshing gears are suitably rendered inside the housing 21 on the mesial end of the tool spindle 22 and the corresponding end of the rotary spindle 23. Meshing of these gears transfers torque from the rotary spindle 23 to the tool spindle 22. A spline 23a for engaging a suitable drive shaft (not shown in the figure) of the rotary drive mechanism (not shown in the figure) is formed on one end of the rotary spindle 23. Engagement of this spline 23a with the drive shaft enables torque from the rotary drive mechanism to be positively transferred from the rotary spindle 23 to the tool spindle 22, thereby turning the tool spindle 22 (rotary tool T) on its axis of rotation.

As shown in Fig. 1, Fig. 4, and Fig. 5, the turret 30 has a plurality of annular positioning members 31, mounting holes 35, through-holes 36, and threaded holes 37.

The outside surface of each positioning member 31 functions as a tool holder mounting surface 30a with the three keys 32, 33, 34 projecting upward from the top surface. Each mounting hole 35 is rendered as an opening in the tool holder mounting surface 30a, and a positioning member 31 is inserted to the mounting hole 35 so that the keys 32, 33, 34 are protruding from tool holder mounting surface 30a. The mounting arbor 21b of the rotary tool holder 20 is inserted to the through-hole 36, which has one end opening to the bottom of mounting hole 35 and communicating with the center hole 31a of positioning member 31 and the other end communicating with the internal cavity 30b of turret 30. The threaded holes 37 are formed at positions matching the bolt holes 21c in the rotary tool holder 20, and bolts 28 are screwed into the threaded holes 37.

The center hole 31a and through-hole 36 in positioning member 31 are both slightly larger than the outside diameter of the mounting arbor 21b of the rotary tool holder 20.

Two positioning holes 31b are formed passing vertically through the positioning member 31, and two positioning pins 35a are rendered protruding from the bottom of the mounting hole 35. The positioning member 31 is positioned inside the mounting hole 35 by fitting the positioning pins 35a into the corresponding positioning holes 31b, and is fastened in the mounting hole 35 with bolts 38 so that the positioning member 31 can be removed as needed. Note that the positioning pins 35a and bolts 38 are rendered so that they do not protrude above the top surface of the positioning member 31.

The first key 32, second key 33, and third key 34 are formed in an arc around the outside of the positioning member 31. The walls of the keys 32, 33, 34 that are aligned with the direction of this arc are parallel to each other and form engagement surfaces 32a, 33a, 34a that can engage engagement surfaces 24a, 25a, 26a, 27a of key slots 24, 25, 26, 27. The engagement surfaces 32a, 34a of the first key 32 and third key 34 are perpendicular to the engagement surfaces 33a of the second key 33. The first key 32 and third key 34 are rendered on opposite sides of the center hole 31a of positioning member 31 (with a specific distance between the first key 32 and third key 34) so that their engagement surfaces 32a, 34a are located in the same planes.

While omitting detailed description, the turning tool holder 10 and rotary tool holder 11 have key slots (not shown in the figure) identical to the key slots rendered in rotary tool holder 20, and by engaging these key slots with the keys 32, 33, 34 of the positioning member 31, the turning tool holder 10 and rotary tool holder 11 can be positioned on the turret 30. In addition, rotary tool holder 11 holds the rotary tool T so that the axis of the tool is perpendicular to the turret mounting surface 21 a of the rotary tool holder 20.

To mount a rotary tool holder 20 on the turret 30 of a tool rest 1 according to this embodiment of the invention, the keys 32, 33, 34 of the positioning member 31 of the turret 30 are inserted to the key slots 24, 25, 26, 27 in the rotary tool holder 20. More particularly, however, when the rotary tool T faces the front of the turret 30 as indicated by arrow E in Fig. 4 (such as when processing a workpiece held on the first main spindle), the first key 32 is fit into the first key slot 24, the second key 33 is fit into the second key slot 25, and the third key 34 is fit into the third key slot 26 so that the engagement surfaces 32a, 33a, 34a of the first key 32, second key 33, and third key 34 engage the engagement surfaces 24a, 25a, 26a of the first key slot 24, second key slot 25, and third key slot 26. This positions the rotary tool holder 20 on the turret 30 with the turret mounting surface 21a of the rotary tool holder 20 in contact with the tool holder mounting surface 30a of the turret 30.

However, if the rotary tool T faces the back of the turret 30 as indicated by arrow F in Fig. 4 (such as when processing a workpiece held on the second main spindle), the third key 34 is fit into first key slot 24, the second key 33 is fit into fourth key slot 27, and the first key 32 is fit into third key slot 26 so that the engagement surfaces 32a, 33a, 34a of the first key 32, second key 33, and third key 34 mate with the engagement surfaces 26a, 27a, 24a of the third key slot 26, fourth key slot 27, and first key slot 24. This positions the rotary tool holder 20 on the turret 30 with the turret mounting surface 21a and tool holder mounting surfaces 30a touching.

After thus positioning the rotary tool holder 20 on the turret 30, bolts 28 are screwed into threaded holes 37, and the rotary tool holder 20 is thus fastened to the turret 30 by the bolts 28. This completes installing a rotary tool holder 20 on the turret 30. The turning tool holder 10 and rotary tool holder 11 are positioned and installed to the turret 30 in the same way as the rotary tool holder 20 by appropriately matching the key slots to the keys 32, 33, 34.

The indexing mechanism (not shown in the figure) of the lathe (not shown in the figure) then indexes the appropriate rotary tool T or lathe tool S to the work position to process a workpiece held on the first main spindle (not shown in the figure) or second main spindle (not shown in the figure).

A tool rest 1 according to this embodiment of the invention thus affords easily and quickly installing tool holders 10, 11, 20 to a turret 30 because the tool holders 10, 11, 20 are positioned to the turret 30 by mating keys 32, 33, 34 with key slots 24, 25, 26, 27 [34, 35, 36, 37, sic], the insertion length of the keys 32, 33, 34 in the key slots in the attaching/detaching direction of the tool holder is short, and the keys 32, 33, 34 can thus be easily inserted into the key slots 24, 25, 26, 27 [34, 35, 36, 37, sic].

Furthermore, because the tool holders 10, 11, 20 can be easily installed to the turret 30, problems caused by deficient installation of the tool holder 10, 11, 20 can be prevented, and the tool holders 10, 11, 20 can be installed to the turret 30 with good precision. Workpiece machining precision can thus be improved.

Furthermore, locating the first key 32 and third key 34 on opposite sides of the center hole 31 a in the positioning member 31 affords a wide gap between the first key 32 and third key 34. This increases the positioning precision in the direction of tool holder 10, 11, 20 rotation relative to the turret 30 as indicated by the arrow in Fig. 3, and makes it possible to improve workpiece machining precision.

As also described above the keys 32, 33, 34 are rendered in unison with the positioning member 31 in this preferred embodiment of the invention. This is because if the keys 32, 33, 34 are discretely produced and then assembled to the tool holder mounting surfaces 30a of the turret 30, the manufacturing precision of the keys 32, 33, 34 and the precision with which the keys are assembled to the turret 30 reduces the positioning precision of the keys 32, 33, 34 relative to each other, thereby also possibly reducing the positioning precision of the tool holders 10, 11, 20. By forming the keys 32, 33, 34 in unison with the positioning member 31, however, a drop in the positioning precision of the keys 32, 33, 34 can be prevented and the keys can be more precisely positioned relative to each other, thereby also improving the positioning precision of the tool holders 10, 11, 20.

Yet further, because the positioning member 31 is detachably fastened in the mounting hole 35 using bolts 38, it is possible to remove and replace only the positioning member 31 if the keys 32, 33, 34 of the positioning member 31 become worn or damaged due to repeated replacement of the tool holder 10, 11, 20, thus reducing the repair and replacement cost.

Furthermore, by rendering four key slots 24, 25, 26, 27 [34, 35, 36, 37, sic] in the rotary tool holder 20, the rotary tool holder 20 can be reversed and installed to the turret 30, that is, the rotary tool holder 20 can be installed to the turret 30 so that the rotary tool T faces either the front or the back side of the turret 30. This improves the versatility of the tool rest 1.

The present invention has been described above with reference to a preferred embodiment thereof, but the invention shall not be limited by the foregoing embodiment and can be varied in many ways without departing from the scope of the accompanying claims.

For example, the keys 32, 33, 34 are formed in unison with the positioning member 31 in the embodiment described above, but the invention shall not be so limited. As shown in Fig. 6 and Fig. 7, for example, a first positioning member 40 rendered with first key 32, a second positioning member 41 rendered with second key 33, and a third positioning member 42 rendered with third key 34 can be used.

Each of these positioning members 40, 41, 42 is an L-shaped member that is detachably affixed to the turret 30 by means of bolts 43a, 44a, 45a screwed into three mounting holes 43, 44, 45 formed in the tool holder mounting surface 30a of the turret 30 so that the keys 32, 33, 34 protrude from the tool holder mounting surface 30a. Note that the other parts of the positioning members 40, 41, 42 and the bolts 43a, 44a, 45a are rendered so that they do not protrude above the tool holder mounting surface 30a.

These mounting holes 43, 44, 45 are formed through the end face of the tool holder mounting surface 30a at positions centered on through-hole 36 and offset from the sides of the through-hole 36 with mounting hole 43 and mounting hole 45 located on a first line and mounting hole 44 on a line at a right angle to this first line.

Thus rendering the keys 32, 33, 34 to the positioning members 40, 41, 42 affords the same effect described in the first embodiment above, but variation in the manufacturing precision of the positioning members 40, 41, 42 and how precisely the positioning members 40, 41, 42 are installed to the turret 30 could result in a loss of positioning precision between the keys 32, 33, 34.

Four key slots 24, 25, 26, 27 [34, 35, 36, 37, sic] are rendered in the tool holders 10, 11, 20 described above, but provided that there are at least two key slots with a relationship as defined in claim 1, either the second key slot 25 [35, sic] or the fourth key slot 27 [37, sic] could be omitted. If one of these key slots is omitted, however, the rotary tool holder 20 cannot be reversed to change the orientation of the rotary tool T.

Yet further, preferred embodiments of the present invention have a single positioning member 31 rendered in unison with three keys, i.e., first key 32, second key 33, and third key 34, or three positioning members 40, 41, 42 each rendered in unison with a key 32, 33, 34 as described above, but the invention shall not be so limited. More particularly, the first key 32 or third key 34 could be omitted from the positioning member 31, or first positioning member 40 or third positioning member 42 could be omitted, provided that there are at least two key slots with a relationship as defined in claim 1.

The tool holders 10, 11, 20 are fastened by bolts 28 in the preferred embodiments described above, but the method of fastening the tool holders 10, 11, 20 shall not be limited to using bolts.

Only selected embodiments have been chosen to illustrate the present invention. To those skilled in the art, however, it will be apparent from the foregoing disclosure that various changes and modifications can be made herein without departing from the scope of the invention as defined in the appended claims. Furthermore, the foregoing description of the embodiments according to the present invention is provided for illustration only, and not for limiting the invention as defined by the appended claims.

## Claims

1. A tool rest (1)
furnished with tool holders (10,11,20) for holding tools; a rotatably supported, polygonal columnar turret (30) onto the outer peripheral surface of which a plurality of the tool holders (10,11,20) is detachably/reattachably mounted; and an indexing mechanism for rotating the turret (30) to index into an operating position a preestablished tool holder (10,11,20) among the plurality of tool holders (10,11,20) mounted on the turret (30)
**characterized in that**
said turret (30) comprises a positioning member (31,40) formed in unison with a first key (32) and further comprises a second key (33) ;
said first and second keys (32,33) each having parallel engagement surfaces (32a,33a) on either side are formed protruding from each tool-holder mounting surface (30a) on the outer peripheral surface of the turret (30) and are formed so that each key's engagement surfaces (32a,33a) are orthogonal to those of the other key; and
key slots (24,25) for receiving the first key (32) and second key (33) to engage with the key engagement surfaces (32a,33a) are formed in the turret mounting surface (30a) of the tool holder (10,11,20).

2. A tool rest (1) as set forth in claim 1, wherein:
a third key (34) having parallel side engagement surfaces (34a) is rendered protruding from each tool holder mounting surface (30a) at a position separated a specific distance from the first key (32) so that the engagement surfaces (34a) of the third key (34) are coplanar to the engagement surfaces (32a) of the first key (32); and
the key slots (24,25,26) are formed to accept and engage the engagement surfaces (32a,33a,34a) of the first key (32), second key (33), and third key (34) inserted thereto.

3. A tool rest (1) as set forth in claim 1, wherein :
a mounting hole (35) in which the positioning member (31) is installed so that the first key (32) and second key (33) protrude from the tool holder mounting surface (30a) is rendered in each tool holder mounting surface (30a).

4. A tool rest (1) as set forth in claim 2, wherein:
the positioning member (31) is formed in unison with the first key (32), second key (33), and third key (33); and
a mounting hole (35) in which the positioning member (31) is installed so that the first key (32), second key (33), and third key (34) protrude from the tool holder mounting surface (30a) is rendered in each tool holder mounting surface (30a).

5. A tool rest (1) as set forth in claim 3, wherein the positioning member (31) is installed freely attachably and detachably in the mounting hole (35) in each tool holder mounting surface (30a).

6. A tool rest (1) as set forth in claim 4, wherein the positioning member (31) is installed freely attachably and detachably in the mounting hole (35) in each tool holder mounting surface (30a).

7. A tool rest (1) as set forth in claim 1, wherein:
a second positioning member (41) is formed in unison with the second key (33); and
each tool holder mounting surface (30a) has two mounting holes (43,44) formed therein so that the positioning members (40,41) can be freely attachably and detachably installed so that the first key (32) and second key (33) protrude from the tool holder mounting surface (30a).

8. A tool rest (1) as set forth in claim 2, wherein:
a second positioning member (41) is formed with the second key (33), and a third positioning member (42) is formed with the third key (34); and
each tool holder mounting surface (30a) has three mounting holes (43,44,45) formed therein so that the positioning members (40,41,42) can be freely attachably and detachably installed so that the first key(32), second key (33), and third key (34) protrude from the tool holder mounting surface (30a).

## Patentansprüche

1. Werkzeugträger (1) mit:
Werkzeughaltern (10, 11, 20) zum Halten von Werkzeugen; einem drehbar gelagerten, polygonalen, säulenförmigen Revolverkopf (30), auf dessen äußeren Umfangsfläche eine Mehrzahl von Werkzeughaltern (10, 11, 20) abnehmbar/wieder anbringbar befestigt ist; und einer Schalteinrichtung zum Drehen des Revolverkopfes (30), um einen vorbestimmten Werkzeughalter (10, 11, 20) unter der Mehrzahl an auf dem Revolverkopf (30) befestigten Werkzeughaltern (10, 11, 20) in eine Betätigungsstellung zu schalten,
**dadurch gekennzeichnet, dass**
der Revolverkopf (30) ein Positionierungselement (31, 40), welches mit einem ersten Keil (32) übereinstimmend gebildet ist, und zudem einen zweiten Keil (33) aufweist;
wobei der erste und zweite Keil (32, 33), welche jeweils parallele Eingriffsflächen (32a, 33a) auf beiden Seiten aufweisen, aus der Befestigungsfläche (30a) jedes Werkzeughalters vorstehend auf der äußeren Umfangsfläche des Revolverkopfes (30) gebildet sind und derart gebildet sind, dass die Eingriffsflächen (32a, 33a) des Keils zu denen des anderen Keils orthogonal sind; und
Keilnuten (24, 25) zum Aufnehmen des ersten Keils (32) und zweiten Keils (33) in der Befestigungsfläche (30a) des Revolverkopfes des Werkzeughalters (10, 11, 20) gebildet sind, um die Keileingriffsflächen (32a, 33a) in Eingriff zu nehmen.

2. Werkzeughalter (1) nach Anspruch 1, wobei
ein dritter Keil (34) mit parallelen, seitlichen Eingriffsflächen (34a) vorstehend aus jeder Befestigungsfläche (30a) des Werkzeughalters an einer Position gestaltet ist, welche einen bestimmten Abstand vom ersten Keil (32) derart beabstandet ist, dass die Eingriffsflächen (34a) des dritten Keils (34) zu den Eingriffsflächen (32a) des ersten Keils (32) koplanar sind; und
die Keilnuten (24, 25, 26) gebildet sind, um die darin eingeführten Eingriffsflächen (32a, 33a, 34a) des ersten Keils (32), zweiten Keils (33) und dritten Keils (34) aufzunehmen und in Eingriff zu nehmen.

3. Werkzeugträger (1) nach Anspruch 1, wobei
eine Befestigungsöffnung (35), in welcher das Positionierungselement (31) derart eingebaut ist, dass der erste Keil (32) und der zweite Keil (33) aus der Befestigungsfläche (30a) des Werkzeughalters hervorstehen, in jeder Befestigungsfläche (30a) des Werkzeughalters gestaltet ist.

4. Werkzeugträger (1) nach Anspruch 2, wobei
das Positionierungselement (31) mit dem ersten Keil (32), zweiten Keil (33) und dritten Keil (34) übereinstimmend gebildet ist; und
eine Befestigungsöffnung (35), in welcher das Positionierungselement (31) derart eingebaut ist, dass der erste Keil (32), zweite Keil (33) und dritte Keil (34) aus der Befestigungsfläche (30a) des Werkzeughalters hervorstehen, in der Befestigungsöffnung (30a) jedes Werkzeughalters gestaltet sind.

5. Werkzeugträger (1) nach Anspruch 3, wobei das Positionierungselement (31) in der Befestigungsöffnung (35) in der Befestigungsfläche (30a) jedes Werkzeughalters frei anbringbar und abnehmbar eingebaut ist.

6. Werkzeugträger (1) nach Anspruch 4, wobei das Positionierungselement (31) in der Befestigungsöffnung (35) in der Befestigungsfläche (30a) jedes Werkzeughalters frei anbringbar und abnehmbar eingebaut ist.

7. Werkzeugträger (1) nach Anspruch 1, wobei
ein zweites Positionierungselement (41) mit dem zweiten Keil (33) übereinstimmend gebildet ist; und
jede Befestigungsfläche (30a) des Werkzeughalters zwei Befestigungsöffnungen (43, 44) aufweist, welche in derselben derart gebildet sind, dass die Positionierungselemente (40, 41) frei anbringbar und abnehmbar eingebaut werden können, so dass der erste Keil (32) und zweite Keil (33) aus der Befestigungsfläche (30a) des Werkzeughalters hervorstehen.

8. Werkzeugträger (1) nach Anspruch 2, wobei
ein zweites Positionierungselement (41) mit dem zweiten Keil (33) und ein drittes Positionierungselement (42) mit dem dritten Keil (34) gebildet ist; und
jede Befestigungsfläche (30a) des Werkzeughalters drei Befestigungsöffnungen (43, 44, 45) aufweist, welche in derselben derart gebildet sind, dass die Positionierungselemente (40, 41, 42) frei anbringbar und abnehmbar eingebaut werden können, so dass der erste Keil (32), zweite Keil (33) und dritte Keil (34) aus der Befestigungsfläche (30a) des Werkzeughalters hervorstehen.

## Revendications

1. Porte-outils (1)
muni de supports à outils (10, 11, 20) destinés à supporter des outils ; d'une tourelle en colonne polygonale (30), soutenue de manière rotative, sur la surface périphérique externe de laquelle une pluralité de supports à outils (10, 11, 20) sont montés de manière détachable/rattachable ; et d'un mécanisme d'indexation destiné à faire tourner la tourelle (30) pour indexer dans une position de fonctionnement un support à outils préétabli (10, 11, 20) parmi la pluralité de supports à outils (10, 11, 20) montés sur la tourelle (30)
**caractérisé en ce que**
ladite tourelle (30) comprend un élément de positionnement (31, 40) formé d'un seul tenant avec une première clavette (32) et comprend en outre une deuxième clavette (33) ;
lesdites première et deuxième clavettes (32, 33) ayant chacune des surfaces de mise en prise parallèles (32a, 33a) sur l'un ou l'autre des côtés sont formées comme dépassant de chaque surface de montage de support à outils (30a) sur la surface périphérique externe de la tourelle (30) et sont formées de sorte que les surfaces de mise en prise (32a, 33a) de chaque clavette soient orthogonales par rapport à celles de l'autre clavette ; et
des rainures de clavettes (24, 25) destinées à recevoir la première clavette (32) et la deuxième clavette (33) pour venir en prise avec les surfaces de mise en prise de clavette (32a, 33a) sont formées dans la surface de montage de tourelle (30a) du support à outils (10, 11, 20).

2. Porte-outils (1) selon la revendication 1, dans lequel :
une troisième clavette (34) ayant des surfaces de mise en prise latérales parallèles (34a) est pratiquée pour dépasser de chaque surface de montage de support à outils (30a) au niveau d'une position séparée selon une distance spécifique de la première clavette (32) de sorte que les surfaces de mise en prise (34a) de la troisième clavette (34) soient coplanaires par rapport aux surfaces de mise en prise (32a) de la première clavette (32) ; et
les rainures de clavettes (24, 25, 26) sont formées pour accepter et mettre en prise les surfaces de mise en prise (32a, 33a, 34a) de la première clavette (32), de la deuxième clavette (33) et de la troisième clavette (34) insérées dans celles-ci.

3. Porte-outils (1) selon la revendication 1, dans lequel :
un orifice de montage (35) dans lequel l'élément de positionnement (31) est installé de sorte que la première clavette (32) et la deuxième clavette (33) dépassent de la surface de montage de support à outils (30a) est pratiqué dans chaque surface de montage de support à outils (30a).

4. Porte-outils (1) selon la revendication 2, dans lequel :
l'élément de positionnement (31) est formé d'un seul tenant avec la première clavette (32), la deuxième clavette (33) et la troisième clavette (34) ; et
un orifice de montage (35) dans lequel l'élément de positionnement (31) est installé de sorte que la première clavette (32), la deuxième clavette (33) et la troisième clavette (34) dépassent de la surface de montage de support à outils (30a) est pratiqué dans chaque surface de montage de support à outils (30a).

5. Porte-outils (1) selon la revendication 3, dans lequel l'élément de positionnement (31) est installé de manière librement attachable et détachable dans l'orifice de montage (35) dans chaque surface de montage de support à outils (30a).

6. Porte-outils (1) selon la revendication 4, dans lequel l'élément de positionnement (31) est installé de manière librement attachable et détachable dans l'orifice de montage (35) dans chaque surface de montage de support à outils (30a).

7. Porte-outils (1) selon la revendication 1, dans lequel :
un deuxième élément de positionnement (41) est formé d'un seul tenant avec la deuxième clavette (33) ; et
chaque surface de montage de support à outils (30a) possède deux orifices de montage (43, 44) formés dans celle-ci de sorte que les éléments de positionnement (40, 41) puissent être librement installés de manière attachable et détachable de sorte que la première clavette (32) et la deuxième clavette (33) dépassent de la surface de montage de support à outils (30a).

8. Porte-outils (1) selon la revendication 2, dans lequel :
un deuxième élément de positionnement (41) est formé avec la deuxième clavette (33), et un troisième élément de positionnement (42) est formé avec la troisième clavette (34) ; et
chaque surface de montage de support à outils (30a) possède trois orifices de montage (43, 44, 45) formés dans celle-ci de sorte que les éléments de positionnement (40, 41, 42) puissent être librement installés de manière attachable et détachable de sorte que la première clavette (32), la deuxième clavette (33) et la troisième clavette (34) dépassent de la surface de montage de support à outils (30a).
